(19) Europäisches Patentamt
European Patent Office
Office européen des brevets

(11) **EP 4 434 150 B1**

(12) **EUROPEAN PATENT SPECIFICATION**

(45) Date of publication and mention
of the grant of the patent:
**01.10.2025 Bulletin 2025/40**

(21) Application number: **21836467.7**

(22) Date of filing: **13.12.2021**

(51) International Patent Classification (IPC):
*H02M 7/217* (2006.01)   *H02M 3/335* (2006.01)
*H02M 1/14* (2006.01)

(52) Cooperative Patent Classification (CPC):
**H02M 7/2173; H02M 1/14; H02M 3/33573;**
**Y02T 10/70**

(86) International application number:
**PCT/EP2021/085348**

(87) International publication number:
**WO 2023/110049 (22.06.2023 Gazette 2023/25)**

(54) **POWER CONVERTER ARRANGEMENT**

STROMRICHTERANORDNUNG

SYSTÈME CONVERTISSEUR DE PUISSANCE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**25.09.2024 Bulletin 2024/39**

(73) Proprietor: **Huawei Digital Power Technologies**
**Co., Ltd.**
**Shenzhen, Guangdong 518043 (CN)**

(72) Inventors:
• **KHALANDAR, Sikandar Mirza Mohammad**
**80992 Munich (DE)**
• **GAONA, Daniel**
**80992 Munich (DE)**
• **FACANHA DE OLIVEIRA, Eduardo**
**80992 Munich (DE)**

(74) Representative: **Maiwald GmbH**
**Engineering**
**Elisenhof**
**Elisenstrasse 3**
**80335 München (DE)**

(56) References cited:
**CN-A- 113 328 639     US-A1- 2019 165 665**
**US-B2- 10 063 077**

## Description

## TECHNICAL FIELD

The invention relates generally to power converters for off-board chargers, and more particularly, the invention relates to a power converter arrangement for converting a three-phase alternating current, AC, voltage into a direct current, DC, voltage. Moreover, the invention also relates to an automotive battery charging device including the power converter arrangement.

## BACKGROUND

Power conversion is a process of converting electrical energy from one form to another. A power converter is an electrical or electro-mechanical device for converting electrical energy. A power converter can convert alternating current, AC, into direct current, DC, and vice versa. Applications such as automotive off-board chargers demand galvanic isolation between a three-phase alternating current, AC, grid input, and a direct current, DC, battery output for safety reasons. The most common way to achieve the galvanic isolation between the AC grid input and the DC battery output is using a two-stage system that is composed by a three-phase AC-DC power factor correction, PFC, rectifier, and an isolated DC-DC converter.

For the AC-DC conversion stage, an existing solution includes an Integrated Active Filter, IAF, circuit. The IAF circuit includes a three-phase electrolytic capacitor-less line-commuted rectifier combined with an active current injection circuit, which is formed by a single fast-commuted half-bridge-leg, a phase inductor, and three low-frequency bidirectional switches. This IAF circuit may require a relatively low implementation effort, however, this comes at the expense of a missing output voltage control. The IAF circuit's output voltage (i.e. voltage across a capacitor, C1) is determined directly by a diode bridge rectifier and hence exhibits a six-pulse shape. Therefore, a back-end isolated DC-DC converter is required not only to provide galvanic insulation but also for output voltage regulation and dynamic current limitation to the battery output. The high-power-factor operation is assured by the back-end isolated DC-DC converter, which needs to be controlled to demand constant power. Thus, a current varying in opposite phase to the six-pulse rectifier voltage needs to be impressed at the output of a front-end converter. This leads to a sinusoidal shape of all mains phase currents after overlaying with the currents of the injection current circuit.

Regarding the isolated DC-DC conversion stage, one of the existing solutions uses a LLC/CLLC resonant converter, due to its ability to achieve zero voltage switching, ZVS, for all switches for a wide operation range. The regulation of the output voltage and current is performed through frequency modulation. Thus, a DC-DC resonant converter is required for providing galvanic isolation as well as output voltage regulation, which is performed through the frequency modulation. In this way, the DC-DC resonant converter's switching frequency needs to be swept within a certain range, depending on resonant tank parameters. Further, having an IAF circuit as a front-end converter makes the switching frequency range wider as its output voltage (i.e. the input of LLC resonant converter) is not constant, however, this exhibits a six-pulse shape determined directly by the diode bridge rectifier. US 10,063,077 B2 describes a converter of a battery charger comprising a six-diode AC-to-DC Vienna boost rectifier cascaded with an isolated resonant DC-to-DC converter connected to the rectifier via DC-link conductors.

CN 113 328 639 A describes a high-power electrolytic hydrogen production rectification power supply and control method. US 2019/165665 A1 describes a voltage converting system.

This existing solution of using the LLC resonant converter has the advantage of having two conversion stages. However, the LLC resonant converter achieves its best performance for switching frequencies close to its resonant frequency, at which condition the gain is unity. For battery charger systems/applications, because of the very wide battery voltage range, the gain range of the LLC resonant converter may be very large. To achieve a very wide gain six-pulse rectifier voltage needs to be impressed at the output of a front-end converter. This leads to a sinusoidal shape of all mains phase currents after overlaying with the currents of the injection current circuit.

Regarding the isolated DC-DC conversion stage, one of the existing solutions uses a LLC/CLLC resonant converter, due to its ability to achieve zero voltage switching, ZVS, for all switches for a wide operation range. The regulation of the output voltage and current is performed through frequency modulation. Thus, a DC-DC resonant converter is required for providing galvanic isolation as well as output voltage regulation, which is performed through the frequency modulation. In this way, the DC-DC resonant converter's switching frequency needs to be swept within a certain range, depending on resonant tank parameters. Further, having an IAF circuit as a front-end converter makes the switching frequency range wider as its output voltage (i.e. the input of LLC resonant converter) is not constant, however, this exhibits a six-pulse shape determined directly by the diode bridge rectifier.

This existing solution of using the LLC resonant converter has the advantage of having two conversion stages. However, the LLC resonant converter achieves its best performance for switching frequencies close to its resonant frequency, at which condition the gain is unity. For battery charger systems/applications, because of the very wide battery voltage range, the gain range of the LLC resonant converter may be very large. To achieve a very wide gain range, the switching frequency needs to be varied to values far from the resonant frequency. As a result, the system efficiency drops quickly, mainly due to the higher amount of reactive power being processed by its components. Besides the lower efficiency, due to the wide frequency range, the design of an LLC transformer is not optimized, which may lead to a larger size of the magnetic core. Further, the requirement for a large number of high frequency, HF, silicon carbide, SiC, diodes for rectification has a big impact on the cost. Additionally, regulating the output voltage of the battery charger by adjusting the switching frequency of the LLC resonant converter results in a more complex and less efficient battery charger system. Furthermore, this may require a larger transformer due to the higher amount of reactive power.

Therefore, there arises a need to address the aforementioned technical problem/drawbacks in providing galvanic isolation between the AC input and the DC output in automotive off-board chargers.

## SUMMARY

It is an object of the invention to provide a power converter arrangement for converting a three-phase alternating current, AC, voltage into a direct current, DC, voltage, and an automotive battery charging device including the power converter arrangement while avoiding one or more disadvantages of prior art approaches.

This object is achieved by the features of the independent claims. Further, implementation forms are apparent from the dependent claims, the description, and the figures.

The invention provides a power converter arrangement for converting a three-phase alternating current, AC, voltage into a direct current, DC, voltage. The invention provides an automotive battery charging device including the power converter arrangement.

According to a first aspect, there is provided a power converter arrangement for converting a three-phase alternating current, AC, voltage into a direct current, DC, voltage, the power converter arrangement comprising:

an AC input terminal for connecting the power converter arrangement to the three-phase AC voltage received from a mains supply;

a DC output terminal for connecting the power converter arrangement to an output load;

an AC-DC converter configured to convert the three-phase AC voltage into a first DC voltage, wherein the first DC voltage exhibits an unregulated six-pulse shape;

a first DC-DC converter configured to convert the first DC voltage into a second DC voltage such that the second DC voltage exhibits a six-pulse shape in opposite phase to the six-pulse shape of the first DC voltage;

a second DC-DC converter configured to:

convert the first DC voltage and the second DC voltage into a third DC voltage; and

provide galvanic isolation between the AC input terminal and the DC output terminal.

The power converter arrangement employs the second DC-DC converter (e.g. a Series Resonant Converter, SRC) which works at a resonant frequency instead of an LLC resonant converter which works at a modulated frequency. The power converter arrangement that has the second DC-DC converter can perform an open-loop operation and has higher efficiency over the entire voltage and load ranges. The second DC-DC converter performs the operation of the resonant converter with unity gain independently upon the load and has simple synchronous rectification as its secondary side is always in phase with its primary side. The second DC-DC converter has a smaller and an optimized transformer due to lower reactive power circulation and enables easy integration of a resonant inductor in the transformer, because of its much lower value. The power converter arrangement is compact, highly efficient, and simple as the second DC-DC converter (i.e. the Series Resonant Converter, SRC) works at a fixed switching frequency close to the resonant frequency and this fixed-frequency operation leads to a smaller transformer size. Furthermore, the use of an optimized 1:1 transformer ratio is possible.

The voltage regulation of the power converter arrangement through the first DC-DC converter (e.g. a partial-power buck converter/a partial-power Buck-Boost converter) is much simpler compared to a complex voltage regulation through the frequency modulation. The power converter arrangement provides a minimized power to the first DC-DC converter (e.g. the partial-power buck converter/the partial-power Buck-Boost converter) and has a highly efficient symmetric 1:1 transformer design. The power converter arrangement requires a very low DC-link capacitance value and does not require bulky electrolytic capacitors, and hence the power converter arrangement is in smaller size, and has lower cost, and higher reliability.

The power converter arrangement has a lower component count, (e.g. a lower amount of expensive SiC diodes) which reduces the cost and provides better efficiency. The power converter arrangement may be used in an off-board charger application with a wide output voltage range (e.g. 200 V to 1000 V). The power converter arrangement may charge both 400 V and 800 V batteries.

Preferably, an average value of the second DC voltage is regulated based on a required voltage across the DC output terminal of the power converter arrangement. Preferably, the third DC voltage is equal to an average value of the sum of the first DC voltage and the second DC voltage divided by a Turns Ratio of a transformer included in the second DC-DC converter.

Preferably, the second DC-DC converter is a Series Resonant Converter, SRC, configured to operate at a fixed switching frequency equal to its resonant frequency. Preferably, the AC-DC converter includes an Integrated Active Filter, IAF, circuit having one or more low-frequency bidirectional switches. Preferably, the first DC-DC converter is a partial-power Buck converter. Preferably, the first DC-DC converter is a partial-power Buck-Boost converter.

Preferably, the power converter arrangement further includes an AC EMI filter to attenuate interference to the mains supply. Preferably, the power converter arrangement further includes a DC EMI filter to attenuate interference to an output load.

According to a second aspect, there is provided an automotive battery charging device including the above power converter arrangement.

Therefore, in contradistinction to the existing solutions, the power converter arrangement is compact, highly efficient, and simple as the second DC-DC converter (i.e. a Series Resonant Converter, SRC) works at a fixed switching frequency close to the resonant frequency and this fixed-frequency operation leads to a smaller transformer size. The power converter arrangement provides a minimized power to the first DC-DC converter (e.g. the partial-power buck converter/the partial-power Buck-Boost converter) and has a highly efficient symmetric 1:1 transformer design. The power converter arrangement requires a very low DC-link capacitance value and does not require bulky electrolytic capacitors, and hence the power converter arrangement is in smaller size, and has lower cost, and higher reliability.

These and other aspects of the invention will be apparent from and the implementation(s) described below.

## BRIEF DESCRIPTION OF DRAWINGS

Implementations of the invention will now be described, by way of example only, with reference to the accompanying drawings, in which:

FIG. 1 illustrates a power converter arrangement for converting a three-phase alternating current, AC, voltage into a direct current, DC, voltage in accordance with an implementation of the invention;

FIG. 2 illustrates a circuit diagram of a power converter arrangement for converting a three-phase alternating current, AC, voltage into a direct current, DC, voltage in accordance with an implementation of the invention;

FIG. 3 illustrates a circuit diagram of a power converter arrangement that shows a power processing by an AC-DC converter, a first DC-DC converter and a second DC-DC converter in accordance with an implementation of the invention;

FIGS. 4A-4B illustrate exemplary waveforms of different voltages of the power converter arrangement of FIG. 2 in accordance with an implementation of the invention;

FIG. 5 illustrates a circuit diagram of a power converter arrangement including a selectable output voltage range for 400 V or 800 V batteries in accordance with an implementation of the invention;

FIG. 6 illustrates exemplary waveforms of different voltages of the power converter arrangement of FIG. 5 in accordance with an implementation of the invention;

FIG. 7 illustrates a circuit diagram of a power converter arrangement including a partial-power Buck-Boost converter as a first DC-DC converter in accordance with an implementation of the invention; and

FIG. 8 illustrates an automotive battery charging device including a power converter arrangement in accordance with an implementation of the invention.

## DETAILED DESCRIPTION OF THE DRAWINGS

Implementations of the invention provide a power converter arrangement for converting a three-phase alternating current, AC, voltage into a direct current, DC, voltage, and an automotive battery charging device including the power converter arrangement.

To make solutions of the invention more comprehensible for a person skilled in the art, the following implementations of the invention are described with reference to the accompanying drawings.

Terms such as "a first", "a second", "a third", and "a fourth" (if any) in the summary, claims, and foregoing accompanying drawings of the invention are used to distinguish between similar objects and are not necessarily used to describe a specific sequence or order. It should be understood that the terms so used are interchangeable under appropriate circumstances, so that the implementations of the invention described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units but may include other steps or units that are not expressly listed or that are inherent to such process, method, product, or device.

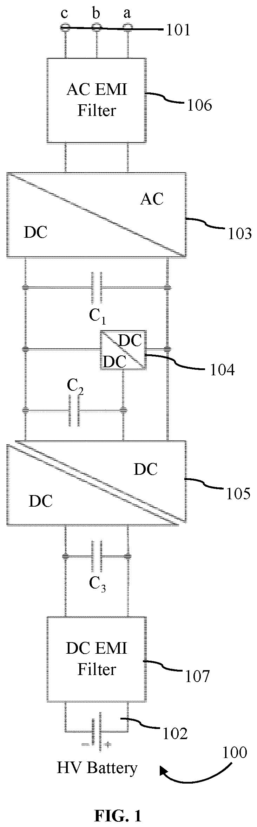

FIG. 1 illustrates a power converter arrangement **100** for converting a three-phase alternating current, AC, voltage into a direct current, DC, voltage in accordance with an implementation of the invention. The power converter arrangement **100** includes an AC input terminal **101,** a DC output terminal **102,** an AC-DC converter **103,** a first DC-DC converter **104,** and a second DC-DC converter **105**. The AC input terminal **101** is configured for connecting the power converter arrangement **100** to the three-phase AC voltage received from a mains supply. The DC output terminal **102** is configured for connecting the power converter arrangement **100** to an output load. The AC-DC converter **103** is configured to convert the three-phase AC voltage into a first DC voltage. The first DC voltage exhibits an unregulated six-pulse shape. The first DC-DC converter **104** is configured to convert the first DC voltage into a second DC voltage such that the second DC voltage exhibits a six-pulse shape in opposite phase to the six-pulse shape of the first DC voltage. The second DC-DC converter **105** is configured to (i) convert the first DC voltage and the second DC voltage into a third DC voltage, and (ii) provide galvanic isolation between the AC input terminal **101** and the DC output terminal **102**.

The power converter arrangement **100** employs the second DC-DC converter **105** (e.g. a Series Resonant Converter, SRC) which works at a resonant frequency instead of an LLC resonant converter works at a modulated frequency. The power converter arrangement **100** that has the second DC-DC converter **105** can perform an open-loop operation and has higher efficiency over the entire voltage and load ranges. The second DC-DC converter **105** performs the operation of the resonant converter with a unity gain independent of the load and has simple synchronous rectification as its secondary side is always in phase with its primary side. The second DC-DC converter **105** has a smaller and an optimized transformer due to lower reactive power circulation and enables easy integration of a resonant inductor in the transformer, because of its much lower value. The power converter arrangement **100** is compact, highly efficient, and simple as the second DC-DC converter **105** (i.e. the Series Resonant Converter, SRC) works at a fixed switching frequency close to the resonant frequency and this fixed-frequency operation leads to a smaller transformer size.

The voltage regulation of the power converter arrangement **100** through the first DC-DC converter **104** (e.g. a partial-power buck converter/a partial-power Buck-Boost converter) is much simpler compared to a complex voltage regulation through the frequency modulation. The power converter arrangement **100** provides a minimized power to the first DC-DC converter (e.g. a partial-power buck converter/a partial-power Buck-Boost converter) and has a highly efficient symmetric 1:1 transformer design. The power converter arrangement **100** requires a very low DC-link capacitance value and does not require bulky electrolytic capacitors, and hence the power converter arrangement **100** is in smaller size, and has lower cost, and higher reliability.

Preferably, the power converter arrangement **100** further includes an AC EMI filter **106** to attenuate interference to the mains supply. Preferably, the power converter arrangement **100** further includes a DC EMI filter **107** to attenuate interference to the output load.

Preferably, an average value of the second DC voltage is regulated based on a required voltage across the DC output terminal **102** of the power converter arrangement **100**. Preferably, the third DC voltage is equal to an average value of the sum of the first DC voltage and the second DC voltage divided by a Turns Ratio of a transformer included in the second DC-DC converter **105**.

Preferably, the AC-DC converter **103** includes an Integrated Active Filter, IAF, circuit having one or more low-frequency bidirectional switches. Preferably, the first DC-DC converter **104** is a partial-power Buck converter. Preferably, the first DC-DC converter **104** is a partial-power Buck-Boost converter. Preferably, the first DC-DC converter **104** is a partial power DC-DC converter responsible for regulating the output voltage (i.e. the second DC voltage). The output of the first DC-DC converter **104** (i.e. the second DC voltage, $V_{C2}$) is connected to a second DC-link capacitor, $C_2$, whose waveform varies in opposite phase to the six-pulse rectifier voltage present across a first DC-link capacitor, $C_1$, compensating the low frequency ripple across $C_1$ (i.e. the second DC voltage, $V_{C2}$, exhibits the six-pulse shape in opposite phase to the six-pulse shape of the first DC voltage, $V_{C1}$).

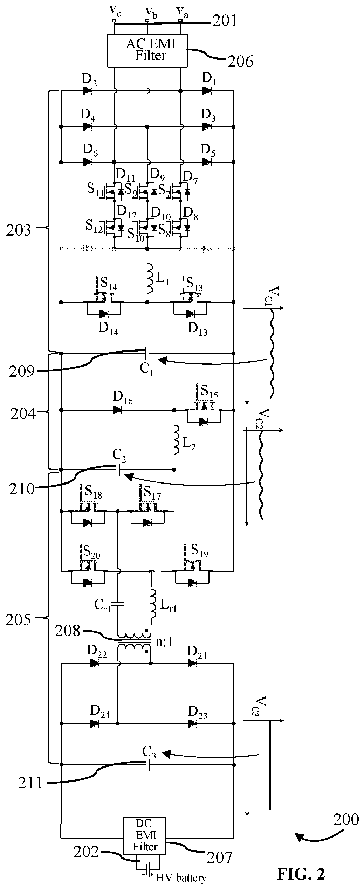

FIG. 2 illustrates a circuit diagram of a power converter arrangement **200** for converting a three-phase alternating current, AC, voltage into a direct current, DC, voltage in accordance with an implementation of the invention. The power converter arrangement **200** includes an AC input terminal **201,** a DC output terminal **202,** an AC-DC converter **203,** a first DC-DC converter **204,** and a second DC-DC converter **205**. The AC input terminal **201** (e.g. $V_a$, $V_b$, and $V_c$) is configured for connecting the power converter arrangement **200** to the three-phase AC voltage received from a mains supply. The DC output terminal **202** is configured for connecting the power converter arrangement **200** to an output load. The AC-DC converter **203** is configured to convert the three-phase AC voltage into a first DC voltage, $V_{C1}$. The first DC voltage exhibits an unregulated six-pulse shape. The first DC-DC converter **204** is configured to convert the first DC voltage into a second DC voltage, $V_{C2}$, such that the second DC voltage exhibits a six-pulse shape in opposite phase to the six-pulse shape of the first DC voltage. The second DC-DC converter **205** is configured to (i) convert the first DC voltage and the second DC voltage into a third DC voltage, $V_{C3}$, and (ii) provide galvanic isolation between the AC input terminal **201** and the DC output terminal **202**.

Preferably, the power converter arrangement **200** further includes an AC EMI filter **206** to attenuate interference to the mains supply. Preferably, the power converter arrangement **200** further includes a DC EMI filter **207** to attenuate interference to the output load.

Preferably, the AC-DC converter **203** includes an Integrated Active Filter, IAF, circuit. Preferably, the AC-DC converter/IAF circuit **203** includes six mains-frequency rectifier diodes (e.g. D$_1$ - D$_6$), three bidirectional switches (e.g. S$_7$- S$_{12}$) modulated twice at the mains frequency with two 60∘ conduction periods within a period of a grid and one Pulse Width Modulated, PWM, bridge (e.g. S$_{13}$ - S$_{14}$) switching at high frequency. The AC-DC converter **203** converts the three-phase AC voltage into the first DC voltage, V$_{C1}$.

Preferably, the first DC-DC converter **204** is a partial-power Buck converter. Preferably, the first DC-DC converter /partial-power Buck converter **204** is responsible for regulating the second DC voltage, V$_{C2}$. The output of the first DC-DC converter /partial-power Buck converter **204** (i.e. the second DC voltage, V$_{C2}$) is connected to a second DC-link capacitor, C$_2$, **210**, whose waveform varies in opposite phase to the six-pulse rectifier voltage present across a first DC-link capacitor, C$_1$, **209,** compensating the low frequency ripple across the first DC-link capacitor, C$_1$, **209**. Preferably, an average value of the second DC voltage, V$_{C2}$, is regulated based on a required voltage across the DC output terminal **202** of the power converter arrangement **200**.

Preferably, the second DC-DC converter **205** is a Series Resonant Converter, SRC, configured to operate at a fixed switching frequency equal to its resonant frequency. Preferably, one end of the second DC-DC converter/SRC **205** is connected to the first DC-link capacitor, C$_1$, **209** while the other end of the second DC-DC converter/SRC **205** is connected to the second DC-link capacitor, C$_2$, **210**. The second DC-DC converter **205** converts the V$_{C1}$ and the V$_{C2}$ into a third DC voltage, V$_{C3}$, and provides galvanic isolation between the AC input terminal **201** and the DC output terminal **202**. The second DC-DC converter **205** may work at a fixed switching frequency equal to its resonant frequency, with unity gain independently upon the output load. Preferably, the output load is provided to a high voltage, HV, battery.

Preferably, the third DC voltage, V$_{C3}$, is equal to an average value of the sum of the first DC voltage, Vci, and the second DC voltage, V$_{C2}$, divided by a Turns Ratio, n, of a transformer **208** included in the second DC-DC converter **205**. Preferably, an equivalent DC-link voltage V$_{DCeq}$ across the input of the second DC-DC converter **205** is defined by an average value of the sum of the first DC voltage, Vci, and the second DC voltage, V$_{C2}$. The equivalent DC-link voltage is as follows:

$$V_{DC_{eq}} = \frac{V_{C_1}+V_{C_2}}{2} .$$

Preferably, the third DC voltage, V$_{C3}$, of the second DC-DC converter/SRC **205** is equal to the equivalent DC-link voltage, V$_{DCeq}$, divided by the turn's ratio, n, of the transformer **208** (i.e. $V_{C_3} = \frac{V_{DC_{eq}}}{n}$ ). Therefore, the achievable range of V$_{C3}$ is around

$\sqrt{2}/2 \cdot V_{ab} \cdot \ n ... \ \sqrt{3/2} \cdot V_{ab} \cdot n$ , where V$_{ab}$ represents the line to line voltage of a three-phase system and n represents turns ratio. Preferably, the third DC voltage V$_{C3}$ may be further reduced (i.e. down to zero) through a duty cycle modulation of the second DC-DC converter/SRC **205,** for instance.

Preferably, the capacitor, C$_{r1}$, blocks the DC component across the resonant tank. Preferably, adopting the second DC-DC converter/SRC **205** blocks the DC component across the resonant tank. In this way, the different voltages across the transformer **208** magnetizing inductor behave like an isolated circuit having an equivalent DC-link voltage of (VC$_1$ + V$_{C2}$)/2. Therefore, the second DC-DC converter **205** is used for galvanic isolation and can work at a fixed switching frequency that is equal to its resonant frequency, with unity gain independent of the output load. Preferably, the output voltage regulation is performed by the first DC-DC converter/partial power buck converter **204,** so that the equivalent DC-link voltage (V$_{C1}$ + V$_{C2}$)/2 is regulated proportionally to the output voltage (i.e. a third DC voltage).

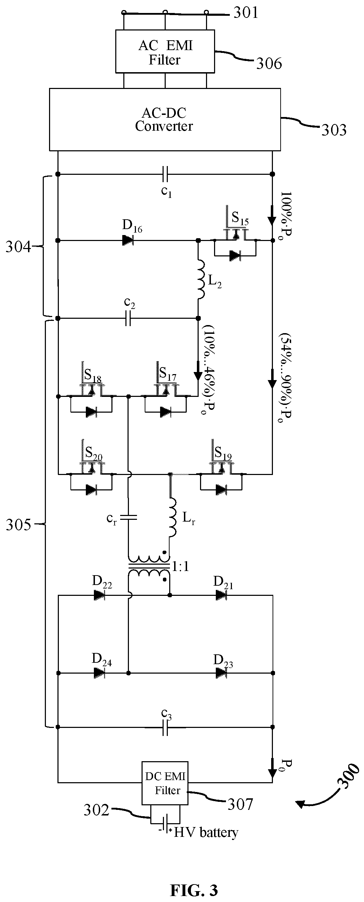

FIG. 3 illustrates a circuit diagram of a power converter arrangement **300** that shows a power processing by an AC-DC converter **303**, a first DC-DC converter **304** and a second DC-DC converter **305** in accordance with an implementation of the invention. The power converter arrangement **300** includes an AC input terminal **301,** a DC output terminal **302,** the AC-DC converter **303,** the first DC-DC converter **304,** and the second DC-DC converter **305**. The AC-DC converter **303** converts a three-phase AC voltage into a first DC voltage, V$_{C1}$. The first DC voltage exhibits an unregulated six-pulse shape. The first DC-DC converter **304** converts the first DC voltage into a second DC voltage, V$_{C2}$ such that the second DC voltage exhibits a six-pulse shape in opposite phase to the six-pulse shape of the first DC voltage. The second DC-DC converter **305** converts the first DC voltage and the second DC voltage into a third DC voltage, V$_{C3}$, and provides galvanic isolation between the AC input terminal **301** and the DC output terminal **302**. Preferably, the AC-DC converter **303** includes an Integrated Active Filter, IAF, circuit having one or more low-frequency bidirectional switches. Preferably, the first DC-DC converter **304** is a partial-power Buck converter. Preferably, the second DC-DC converter **305** is a Series Resonant Converter, SRC, configured to operate at a fixed switching frequency equal to its resonant frequency. Preferably, the power converter arrangement **300** further includes an AC EMI filter **306** to attenuate interference to the mains supply. Preferably, the power converter arrangement **300** further includes a DC EMI filter **307** to attenuate interference to an output load. The functionalities of the above components are described above.

Preferably, an amount of power processed by the first DC-DC converter/partial power buck converter **304** (i.e. P$_{Buck}$) is proportional to its output voltage (i.e. the second DC voltage, V$_{C2}$) divided by the sum of a first DC voltage and a second DC voltage (i.e. $V_{C1}$ and $V_{C2}$). Preferably, the amount of power processed by the first DC-DC converter/partial power buck converter **304** is

$$P_{Buck} = \frac{V_{C_2}}{V_{C_1} + V_{C_2}} \cdot P_o$$ . Most of the power may be transferred directly from the AC-DC converter/IAF circuit **303** to the second DC-DC converter/SRC **305,** without it needing to be processed by the first DC-DC converter/-partial power buck converter **304.** Preferably, with the first DC-DC converter/partial power buck converter **304,** the power processed by it is always lower than 50 % of the total output power. Preferably, the amount of power processed by the first DC-DC converter/partial power buck converter **304** is lower, if the output voltage is lower. For example, considering a line voltage $V_{ab}$ = 400 V, an average of only 10% of the output power is processed by the first DC-DC converter/partial power buck converter **304** for 300 V output. For 500 V, the amount of processed power is 46%. Therefore, the partial power buck converter **304** processes a maximum of total power (i.e. 10% - 46%) and the remaining power (i.e. 54% - 90%) flows directly from the IAF circuit **303** to the SRC **305.**

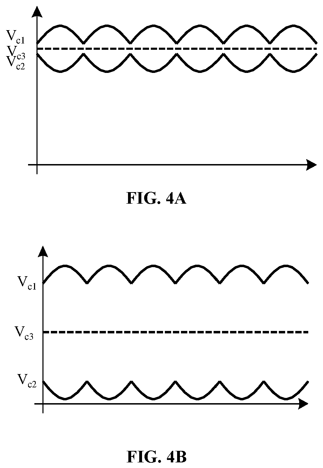

FIGS. 4A-4B illustrate exemplary waveforms of different voltages of the power converter arrangement **200** of FIG. 2 in accordance with an implementation of the invention. Preferably, the power converter arrangement **200** includes a partial power buck converter as the first DC-DC converter **204** and considering the transformer's **208** turns ratio, n, as 1 (i.e. 1:1), the maximum and minimum second DC voltages, $V_{C2}$, are shown in FIG. 4A and FIG. 4B respectively. Preferably, the second DC voltage, $V_{C2}$, of the partial power buck converter compensates the low frequency ripple across $C_1$ **209**, so that the average value of the sum of a first DC voltage, $V_{C1}$, and $V_{C2}$ is a constant value equal to a battery voltage.

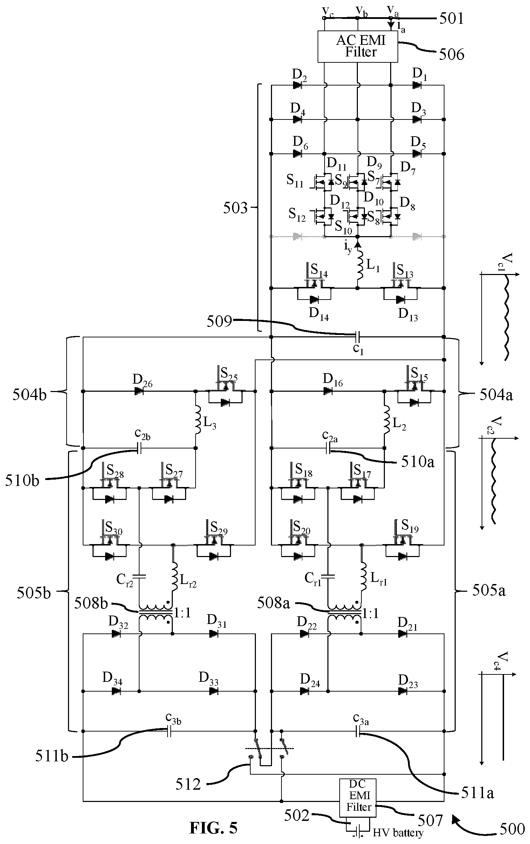

FIG. 5 illustrates a circuit diagram of a power converter arrangement **500** including a selectable output voltage range for 400 V or 800 V batteries in accordance with an implementation of the invention. The power converter arrangement **500** includes an AC input terminal **501,** a DC output terminal **502,** an AC-DC converter **503,** one or more first DC-DC converters **(504a,** and **504b),** and one or more second DC-DC converters **(505a,** and **505b).** The AC-DC converter **503** converts a three-phase AC voltage into a first DC voltage, $V_{C1}$. The first DC voltage exhibits an unregulated six-pulse shape. The first DC-DC converter **(504a,** and **504b)** converts the first DC voltage into a second DC voltage, $V_{C2}$ such that the second DC voltage exhibits a six-pulse shape in opposite phase to the six-pulse shape of the first DC voltage. The second DC-DC converter **(505a,** and **505b)** converts the first DC voltage and the second DC voltage into a third DC voltage, $V_{C3}$, and provides galvanic isolation between the AC input terminal **501** and the DC output terminal **502.**

Preferably, the power converter arrangement **500** further includes an AC EMI filter **506** to attenuate interference to the mains supply. Preferably, the power converter arrangement **500** further includes a DC EMI filter **507** to attenuate interference to an output load.

Preferably, the AC-DC converter **503** includes an Integrated Active Filter, IAF, circuit having one or more low-frequency bidirectional switches. Preferably, the first DC-DC converter **(504a,** and **504b)** is a partial-power Buck converter. Preferably, the second DC-DC converter **(505a,** and **505b)** is a Series Resonant Converter, SRC configured to operate at a fixed switching frequency equal to its resonant frequency. Preferably, the outputs of the second DC-DC converter/SRC **(505a** and **505b)** are connected to a first DC-link capacitor, $C_{3a}$, **511a,** and to a second DC-link capacitor, $C_{3b}$, **511b,** respectively. The first DC-link capacitor, $C_{3a}$, **511a,** and the second DC-link capacitor, $C_{3b}$, **511b,** may be connected in series or in parallel to each other according to a position of a configurable switch arrangement **512.** Preferably, a parallel connection is desired for voltage operation range of 400 V batteries, while a series connection is desired for voltage operation range of 800 V batteries.

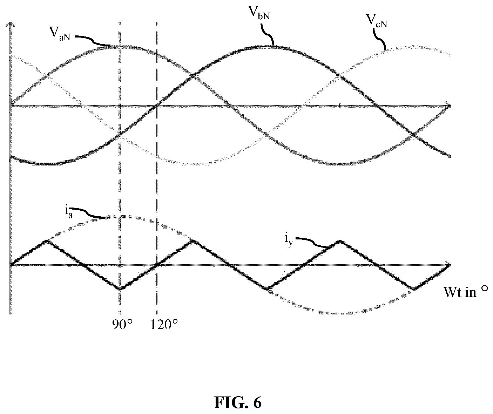

Preferably, the power converter arrangement **500** includes one or more transformers **(508a** and **508b),** a capacitor, $C_1$, **509,** a capacitor $C_{2a}$, **510a** and a capacitor, $C_{2b}$, **510b.** The functions of these capacitors and transformers are as described above. FIG. 6 illustrates exemplary waveforms of different voltages of the power converter arrangement **500** of FIG. 5 in accordance with an implementation of the invention.

FIG. 6 shows the waveforms of different currents (e.g. $i_a$, and $i_y$) of the power converter arrangement **500.** FIG. 6 also shows the waveforms of different voltages of the AC input terminal **501** (e.g. $V_{aN}$, $V_{bN}$, and $V_{cN}$) of the power converter arrangement **500.**

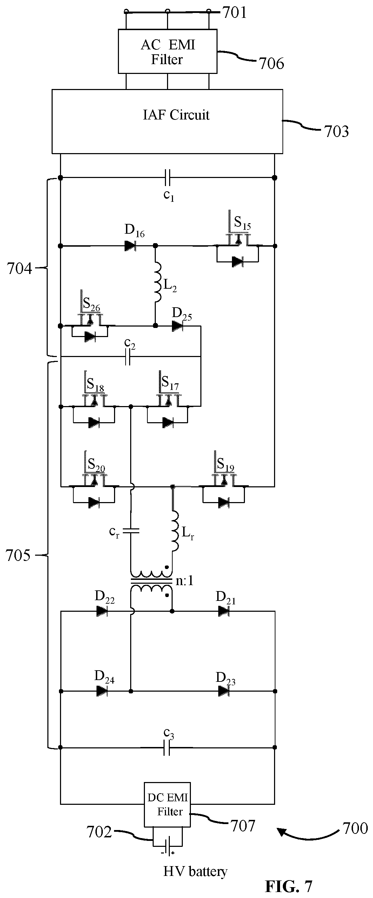

FIG. 7 illustrates a circuit diagram of a power converter arrangement **700** including a partial-power Buck-Boost converter **704** as a first DC-DC converter in accordance with an implementation of the invention. The power converter arrangement **700** includes an AC input terminal **701,** a DC output terminal **702,** an Integrated Active Filter, IAF, circuit **703** as an AC-DC converter, the partial-power Buck-Boost converter **704** as the first DC-DC converter, and a second DC-DC converter **705.** Preferably, the second DC-DC converter **705** is a Series Resonant Converter, SRC, configured to operate at a fixed switching frequency equal to its resonant frequency. Preferably, the power converter arrangement **700** further includes an AC EMI filter **706** to attenuate interference to the mains supply. Preferably, the power converter arrangement **700** further includes a DC EMI filter **707** to attenuate interference to an output load. The functionalities of the components are described above.

Unlike using a partial-power Buck converter as a first DC-DC converter, the partial-power Buck-Boost converter **704** outputs a second DC voltage, $V_{C2}$, which can be higher than a first DC voltage, $V_{C1}$, from the IAF circuit **703.** Therefore, the ideal regulation range of an equivalent DC-link voltage $V_{DCeq}$ now goes from

$\sqrt{2}/2 \cdot V_{ab}$ up to values which can be higher than

$\sqrt{2} \cdot V_{ab}$ . Nevertheless, the amount of power processed by the additional partial-power Buck-Boost converter **704,** can be higher than 50% of the output power, which leads to larger sizes than for a partial power buck converter.

This power converter arrangement **700** provides a unidirectional topology, but a bidirectional circuit may be constructed by replacing some diodes by transistors, like MOSFETs or IGBTs. However, the voltage regulation principle remains unchanged. For the galvanic isolation, any isolated DC-DC converter may be adopted. Due to its high efficiency and compact size, the series resonant converter operating with a fixed frequency at resonant frequency can be used for the galvanic isolation.

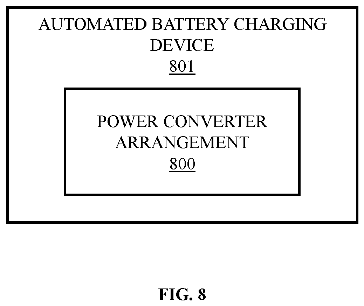

FIG. 8 illustrates an automotive battery charging device **801** including a power converter arrangement **800** in accordance with an implementation of the invention. The functionalities of the power converter arrangement **800** are described above. Preferably, the power converter arrangement **800** is used in the automotive battery charging device **801** for converting a three-phase alternating current, AC, voltage into a direct current, DC, voltage and for providing galvanic isolation between an AC input terminal and a DC output terminal.

It should be understood that the arrangement of components illustrated in the figures described are exemplary and that other arrangement may be possible according to the subject-matter defined by the attached claims.

**Claims**

1. A power converter arrangement (100, 200, 300, 500, 700, 800) for converting a three-phase alternating current, AC, voltage into a direct current, DC, voltage, the power converter arrangement (100, 200, 300, 500, 700, 800) comprising:

   an AC input terminal (101, 201, 301, 501, 701) for connecting the power converter arrangement (100, 200, 300, 500, 700, 800) to the three-phase AC voltage received from a mains supply;
   a DC output terminal (102, 202, 302, 502, 702) for connecting the power converter arrangement (100, 200, 300, 500, 700, 800) to an output load;
   an AC-DC converter (103, 203, 303, 503) configured to convert the three-phase AC voltage into a first DC voltage, wherein the first DC voltage exhibits an unregulated six-pulse shape;
   a first DC-DC converter (104, 204, 304, 504) configured to convert the first DC voltage into a second DC voltage such that the second DC voltage exhibits a six-pulse shape in opposite phase to the six-pulse shape of the first DC voltage;
a second DC-DC converter (105, 205, 305, 505, 705) configured to:

   convert the first DC voltage and the second DC voltage into a third DC voltage; and
   provide galvanic isolation between the AC input terminal (101, 201, 301, 501, 701) and the DC output terminal (102, 202, 302, 502, 702).

2. The power converter arrangement (100, 200, 300, 500, 700, 800) of claim 1, wherein an average value of the second DC voltage is regulated based on a required voltage across the DC output terminal (102, 202, 302, 502, 702) of the power converter arrangement (100, 200, 300, 500, 700, 800).

3. The power converter arrangement (100, 200, 300, 500, 700, 800) of claim 2, wherein the third DC voltage is equal to an average value of the sum of the first DC voltage and the second DC voltage divided by a Turns Ratio of a transformer (208) included in the second DC-DC converter (105, 205, 305, 505, 705).

4. The power converter arrangement (100, 200, 300, 500, 700, 800) of any one of the preceding claims, wherein the second DC-DC converter (105, 205, 305, 505, 705) is a Series Resonant Converter, SRC, configured to operate at a fixed switching frequency equal to its resonant frequency.

5. The power converter arrangement (100, 200, 300, 500, 700, 800) of any one of the preceding claims, wherein the AC-DC converter (103, 203, 303, 503) comprises an Integrated Active Filter, IAF, circuit (703) having one or more low-frequency bidirectional switches.

6. The power converter arrangement (100, 200, 300, 500, 700, 800) of any one of the preceding claims, wherein the first DC-DC converter (104, 204, 304, 504) is a partial-power Buck converter.

7. The power converter arrangement (100, 200, 300, 500, 700, 800) of any one of claims 1 to 5, wherein the first DC-DC converter (104, 204, 304, 504) is a partial-power Buck-Boost converter (704).

8. The power converter arrangement (100, 200, 300, 500, 700, 800) of any one of preceding claims, further comprises an AC EMI filter (106, 206, 306, 506, 706) to attenuate interference to the mains supply.

**9.** The power converter arrangement (100, 200, 300, 500, 700, 800) of any one of preceding claims, further comprises a DC EMI filter (107, 207, 307, 507, 707) to attenuate interference to the output load.

**10.** An automotive battery charging device (801) comprising a power converter arrangement (100, 200, 300, 500, 700, 800) of any one of claims 1 to 9.

**Patentansprüche**

**1.** Stromrichteranordnung (100, 200, 300, 500, 700, 800) zur Umwandlung einer dreiphasigen Wechselspannung (Alternating Current, AC) in eine Gleichspannung (Direct Current, DC), wobei die Stromrichteranordnung (100, 200, 300, 500, 700, 800) Folgendes umfasst:

eine AC-Eingangsklemme (101, 201, 301, 501, 701) zum Verbinden der Stromrichteranordnung (100, 200, 300, 500, 700, 800) mit der von einer Netzstromversorgung empfangene dreiphasige Wechselspannung;
eine DC-Ausgangsklemme (102, 202, 302, 502, 702) zum Verbinden der Stromrichteranordnung (100, 200, 300, 500, 700, 800) mit einer Ausgangslast;
einen AC-DC-Wandler (103, 203, 303, 503), der dazu konfiguriert ist, die dreiphasige Wechselspannung in eine erste Gleichspannung umzuwandeln, wobei die erste Gleichspannung eine ungeregelte Sechs-Puls-Form aufweist;
einen ersten DC-DC-Wandler (104, 204, 304, 504), der dazu konfiguriert ist, die erste Gleichspannung in eine zweite Gleichspannung derart umzuwandeln, dass die zweite Gleichspannung eine Sechs-Puls-Form in entgegengesetzter Phase zur Sechs-Puls-Form der ersten Gleichspannung aufweist;
einen zweiten DC-DC-Wandler (105, 205, 305, 505, 705), der zu Folgendem konfiguriert ist:

Umwandeln der ersten Gleichspannung und der zweiten Gleichspannung in eine dritte Gleichspannung; und
Bereitstellen einer galvanischen Trennung zwischen der AC-Eingangsklemme (101, 201, 301, 501, 701) und der DC-Ausgangsklemme (102, 202, 302, 502, 702).

**2.** Stromrichteranordnung (100, 200, 300, 500, 700, 800) gemäß Anspruch 1, wobei ein Mittelwert der zweiten Gleichspannung basierend auf einer erforderlichen Spannung an der DC-Ausgangsklemme (102, 202, 302, 502, 702) der Stromrichteranordnung (100, 200, 300, 500, 700, 800) geregelt wird.

**3.** Stromrichteranordnung (100, 200, 300, 500, 700, 800) gemäß Anspruch 2, wobei die dritte Gleichspannung gleich einem Mittelwert der Summe der ersten Gleichspannung und der zweiten Gleichspannung geteilt durch ein Übersetzungsverhältnis eines Transformators (208) ist, der in dem zweiten DC-DC-Wandler (105, 205, 305, 505, 705) beinhaltet ist.

**4.** Stromrichteranordnung (100, 200, 300, 500, 700, 800) gemäß einem der vorhergehenden Ansprüche, wobei der zweite DC-DC-Wandler (105, 205, 305, 505, 705) ein Serienresonanzwandler (Series Resonant Converter, SRC) ist, der dazu konfiguriert ist, mit einer festen Schaltfrequenz zu arbeiten, die seiner Resonanzfrequenz entspricht.

**5.** Stromrichteranordnung (100, 200, 300, 500, 700, 800) gemäß einem der vorhergehenden Ansprüche, wobei der AC-DC-Wandler (103, 203, 303, 503) eine integrierte aktive Filterschaltung (Integrated Active Filter, IAF) (703) umfasst, die eine oder mehrere niederfrequente bidirektionale Schalter aufweist.

**6.** Stromrichteranordnung (100, 200, 300, 500, 700, 800) gemäß einem der vorhergehenden Ansprüche, wobei der erste DC-DC-Wandler (104, 204, 304, 504) ein Teilleistungs-Abwärtswandler ist.

**7.** Stromrichteranordnung (100, 200, 300, 500, 700, 800) gemäß einem der Ansprüche 1 bis 5, wobei der erste DC-DC-Wandler (104, 204, 304, 504) ein Teilleistungs-Abwärts-/Aufwärtswandler (704) ist.

**8.** Stromrichteranordnung (100, 200, 300, 500, 700, 800) gemäß einem der vorhergehenden Ansprüche, ferner umfassend einen AC-EMI-Filter (106, 206, 306, 506, 706) zum Dämpfen von Störungen der Netzstromversorgung.

**9.** Stromrichteranordnung (100, 200, 300, 500, 700, 800) gemäß einem der vorhergehenden Ansprüche, ferner umfassend einen DC-EMI-Filter (107, 207, 307, 507, 707) zum Dämpfen von Störungen der Ausgangslast.

**10.** Kraftfahrzeugbatterieladevorrichtung (801), umfassend eine Stromrichteranordnung (100, 200, 300, 500, 700, 800) gemäß einem der Ansprüche 1 bis 9.

**Revendications**

**1.** Système convertisseur de puissance (100, 200, 300, 500, 700, 800) pour convertir une tension de courant alternatif, CA, triphasée en une tension de courant continu, CC, le système convertisseur de puissance (100, 200, 300, 500, 700, 800) comprenant :

un terminal d'entrée CA (101, 201, 301, 501, 701) pour connecter le système convertisseur de puissance (100, 200, 300, 500, 700, 800) à la tension CA triphasée reçue d'une alimentation secteur ;

un terminal de sortie CC (102, 202, 302, 502, 702) pour connecter le système convertisseur de puissance (100, 200, 300, 500, 700, 800) à une charge de sortie ;

un convertisseur CA-CC (103, 203, 303, 503) configuré pour convertir la tension CA triphasée en une première tension CC, dans lequel la première tension CC présente une forme à six impulsions non régulée ;

un premier convertisseur CC-CC (104, 204, 304, 504) configuré pour convertir la première tension CC en une deuxième tension CC de telle sorte que la deuxième tension CC présente une forme à six impulsions en phase opposée à la forme à six impulsions de la première tension CC ;

un second convertisseur CC-CC (105, 205, 305, 505, 705) configuré pour :

> convertir la première tension CC et la deuxième tension CC en une troisième tension CC ; et
>
> fournir une isolation galvanique entre le terminal d'entrée CA (101, 201, 301, 501, 701) et le terminal de sortie CC (102, 202, 302, 502, 702).

2. Système convertisseur de puissance (100, 200, 300, 500, 700, 800) selon la revendication 1, dans lequel une valeur moyenne de la deuxième tension CC est régulée sur la base d'une tension requise aux terminaux de sortie CC (102, 202, 302, 502, 702) du système convertisseur de puissance (100, 200, 300, 500, 700, 800).

3. Système convertisseur de puissance (100, 200, 300, 500, 700, 800) selon la revendication 2, dans lequel la troisième tension CC est égale à une valeur moyenne de la somme de la première tension CC et de la deuxième tension CC divisée par un rapport de transformation d'un transformateur (208) inclus dans le second convertisseur CC-CC (105, 205, 305, 505, 705).

4. Système convertisseur de puissance (100, 200, 300, 500, 700, 800) selon l'une quelconque des revendications précédentes, dans lequel le second convertisseur CC-CC (105, 205, 305, 505, 705) est un convertisseur résonant série, SRC, configuré pour fonctionner à une fréquence de commutation fixe égale à sa fréquence de résonance.

5. Système convertisseur de puissance (100, 200, 300, 500, 700, 800) selon l'une quelconque des revendications précédentes, dans lequel le convertisseur CA-CC (103, 203, 303, 503) comprend un circuit de filtre actif intégré, IAF, (703) ayant un ou plusieurs commutateurs bidirectionnels basse fréquence.

6. Système convertisseur de puissance (100, 200, 300, 500, 700, 800) selon l'une quelconque des revendications précédentes, dans lequel le premier convertisseur CC-CC (104, 204, 304, 504) est un convertisseur abaisseur à puissance partielle.

7. Système convertisseur de puissance (100, 200, 300, 500, 700, 800) selon l'une quelconque des revendications 1 à 5, dans lequel le premier convertisseur CC-CC (104, 204, 304, 504) est un convertisseur abaisseur-élévateur à puissance partielle (704).

8. Système convertisseur de puissance (100, 200, 300, 500, 700, 800) selon l'une quelconque des revendications précédentes, comprend également un filtre EMI CA (106, 206, 306, 506, 706) pour atténuer les interférences avec l'alimentation secteur.

9. Système convertisseur de puissance (100, 200, 300, 500, 700, 800) selon l'une quelconque des revendications précédentes, comprend également un filtre EMI CC (107, 207, 307, 507, 707) pour atténuer les interférences sur la charge de sortie.

10. Dispositif de charge de batterie automobile (801) comprenant un système convertisseur de puissance (100, 200, 300, 500, 700, 800) selon l'une quelconque des revendications 1 à 9.

**FIG. 1**

FIG. 2

**FIG. 3**

$V_{c1}$
$V_{c3}$
$V_{c2}$

**FIG. 4A**

$V_{c1}$

$V_{c3}$

$V_{c2}$

**FIG. 4B**

**FIG. 5**

**FIG. 6**

**FIG. 7**

AUTOMATED BATTERY CHARGING
DEVICE
801

POWER CONVERTER
ARRANGEMENT
800

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10063077 B2
- CN 113328639 A
- US 2019165665 A1